# EUROPEAN PATENT APPLICATION

(11) **EP 0 882 947 A2**
(43) Date of publication of application: **09.12.1998**
(21) Application number: 98304369.6
(22) Date of filing: 03.06.1998
(51) Int. Cl.: G01B 17/02

(54) **Measuring the thickness of a liner for a pipe**

(30) Priority: 04.06.1997 GB 9711413
(71) Applicant: Sonic Techologies Limited, Llanelli, Carmarthenshire SA15 1NJ (GB)
(72) Inventor: Davies, Christopher, Llanelli, Carmarthenshir SA15 1NJ (GB); Davies, Robert Alan, Tumble, Carmarthenshire SA14 6HG (GB)
(74) Representative: Jackson, Derek Charles

(57) **Abstract**

An apparatus for measuring the thickness of a liner for a pipe (2) includes a chassis (1) and an ultrasonic probe (5). The chassis (1) is adapted to be moved through the pipe. The ultrasonic probe (5) is mounted on the chassis. A biasing spring (11) is provided for urging the ultrasonic probe against the internal surface of the liner (4). A controller, such as a computer (17), controls the transmission of pulses of ultrasonic energy from the ultrasonic probe (5) towards the liner (4) the reception of echoes therefrom. A processor, such as a computer (17), processes the echoes so as to determine the thickness of the liner (4).

## Description

This invention relates to an apparatus for measuring the thickness of a liner for a pipe.

Pipes are used extensively for conveying material from one location to another. Typical materials conveyed by pipes are liquids such as water (both fresh water and waste water) and gases such as natural gas. Generally, such pipes are buried underground and hence afford limited access.

If, for any reason, such a pipe should become damaged then repair or replacement of the pipe can be very costly. If, for example, the pipe extends beneath a roadway then obtaining access to the pipe can also create considerable inconvenience.

It is known to re-line pipes without the need for lengthy and expensive excavation. In this case, access to the damaged pipe can be, for example, from the nearest manhole or inspection/monitoring point. The re-lining process generally involves inverting a resin impregnated felt liner tube along the length of the pipe and subsequently curing the resin. Once cured, the felt liner becomes a mechanically strong sleeve replacing the damaged pipe from within.

Conventionally, once the resin has been cured a small piece of the liner is removed for thickness measurement purposes. Clearly a single small sample is unsatisfactory for validating the liner thickness because it provides no guarantee of quality along the length of the re-lined pipe.

It is therefore an object of the present invention to provide an apparatus for measuring the thickness of a liner for a pipe substantially along the entire length of the liner.

According to the present invention there is provided an apparatus for measuring the thickness of a liner for a pipe, which apparatus comprises a chassis adapted to be moved through the pipe, ultrasonic probe means mounted on the chassis, biasing means for urging the ultrasonic probe means against the internal surface of the liner, means for controlling the ultrasonic probe means to transmit a pulse of ultrasonic energy towards the liner and to receive an echo therefrom, and means for processing the echo so as to determine the thickness of the liner.

The chassis may be provided with wheels for conveying the apparatus through the pipe.

The ultrasonic probe means may incorporate a plurality of ultrasonic probes. Three probes may be provided. The probes may be spaced substantially equiangularly around the axis of the pipe. The ultrasonic probe means may be rotatable relative to the axis of the pipe. The ultrasonic probe means may comprise a wheel probe.

The ultrasonic probe means may be biased against the internal surface of the liner by spring means, such as a coil spring. The ultrasonic probe means may be biased against the internal surface of the liner in a direction substantially perpendicular to the surface of the liner.

The apparatus may incorporate means for determining the distance the apparatus has travelled along the pipe. The distance determining means may comprise a shaft encoder.

For a better understanding of the present invention and to show more clearly how it may be carried into effect reference will now be made, by way of example, to the accompanying drawings in which:
Figure 1 is a diagrammatic cross-sectional view of one embodiment of an apparatus for measuring the thickness of a liner for a pipe in accordance with the present invention;
Figure 2 is an elevational view, partly cut away, of the apparatus shown in Figure 1; and
Figure 3 is a view, partly in cross section, of an ultrasonic probe forming part of the apparatus shown in Figures 1 and 2.

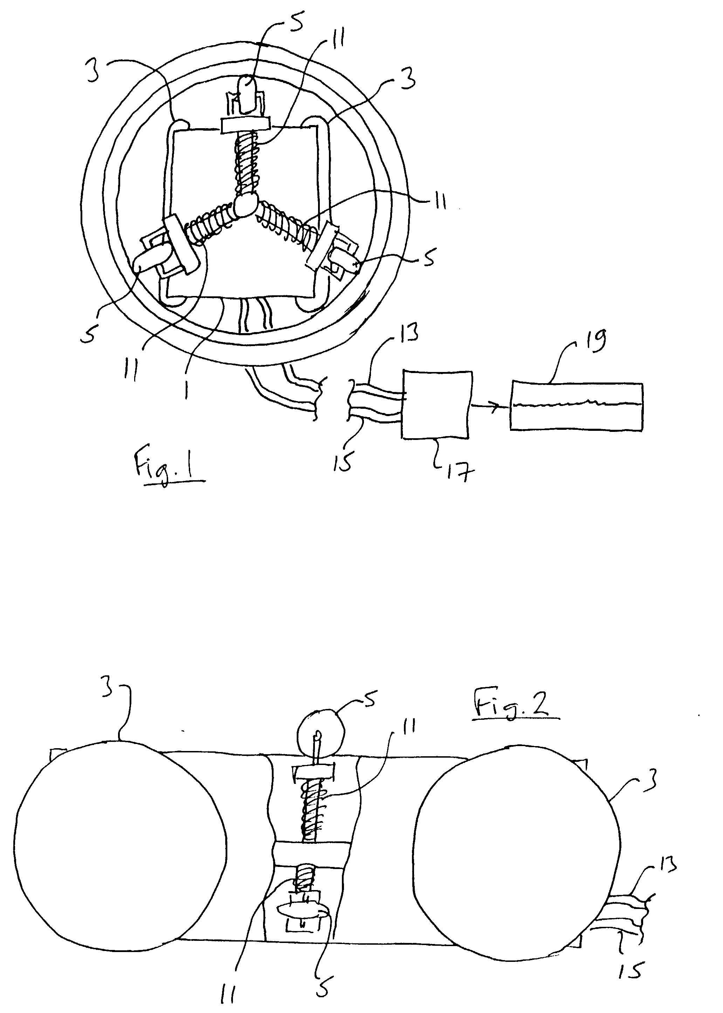

The apparatus shown in Figures 1 and 2 comprises a conventional pipe inspection cart incorporating a chassis 1 and wheels 3, the cart being adapted to traverse the length of the pipe 2 internally thereof. Such inspection carts are generally provided with a video camera (not shown), although this is not essential for the present invention, and with cable means for relaying the video signals and also for providing signals controlling the movement of the cart.

As an alternative, which is not illustrated, the cart may incorporate alternative means for providing locomotion, such as articulated legs or tracks, or may be in the form of a sled to enable the cart to be drawn through the pipe.

As shown in Figures 1 and 2, the inspection cart incorporates ultrasonic measuring means in the form of three ultrasonic probes 5 are mounted on the cart, the probes being spaced equiangularly around the axis of the pipe, that is at 120 degree intervals. It is not essential to provide three ultrasonic probes and a greater or lesser number, such as one, may be provided if desired. In the illustrated embodiment, the ultrasonic probes are fixed relative to the axis of the pipe, but as an alternative the probes could be mounted so as to be rotatable about the axis of the pipe so as to describe a helix over the internal wall of the liner 4 as the cart moves along the pipe.

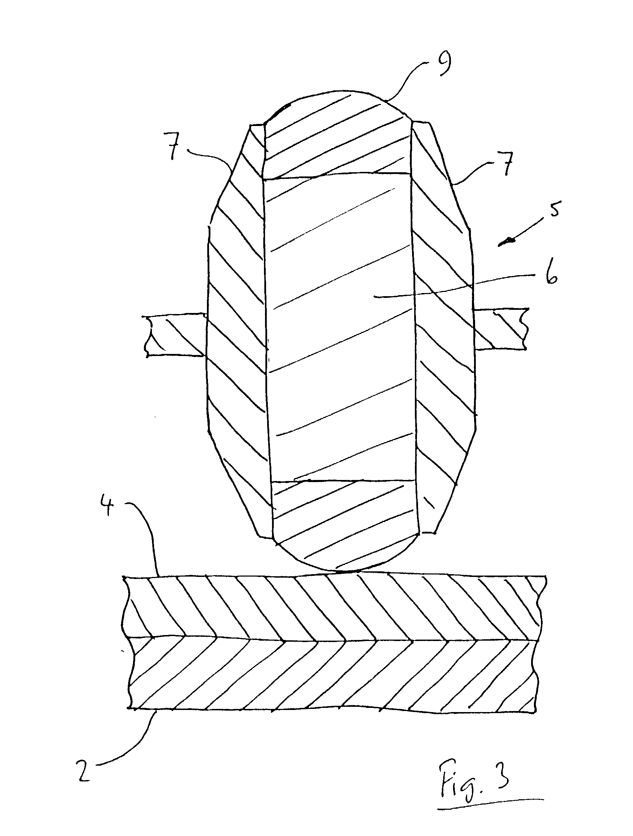

As shown in Figure 3, the ultrasonic probes 5 in the illustrated embodiment are in the form of wheel probes. Wheel probes have the advantages that wear and tear are relatively low even for an uneven surface and that no couplant is required between the ultrasonic probe and the internal wall of the liner. However, alternative forms of ultrasonic probe can be employed if desired, such as a point or dabber probe, together with a source of lubricant/couplant to ensure good ultrasonic coupling with the internal wall of the liner.

The wheel probe 5 preferably incorporates two crystals (not shown, one for transmission of the ultrasonic signal and the other for reception. However, a single crystal for both transmission and reception is an alternative. The crystals are situated in a freely rotatable central housing 6 of the wheel probe and are bounded on each side in the axial direction by side plates 7 and are bounded peripherally by a wheel 9 made of a known material which acoustically matches the signals to and from the liner. An ultrasonic signal is transmitted at predetermined intervals, for example at predetermined distance intervals, such as each 50 mm, along the pipe.

The probes 5 are urged against the internal wall of the liner by means of a spring 11, such as a coil spring, in such a way that the probe is perpendicular to the wall of the liner. However, alternative biasing means can be employed such as a rack and pinion assembly biased by an electric motor (not shown).

In use of the apparatus, the inspection cart is inserted into one end of a pipe 2, the thickness of a lining 4 of which is to be checked and the cart is advanced into the pipe. The distance along the pipe is measured by any convenient means, for example a distance encoder (not shown) provided as part of a conventional inspection cart or a separate encoder (not shown) dedicated to the ultrasonic measuring means. A suitable encoder may be a shaft encoder in which a disc is formed with one or more slits which are detected optically or magnetically as the shaft rotates. A shaft encoder can be linked to the wheels 3 of the inspection cart or to one of the wheel probes 5. Where neither type of wheel is provided the encoder may itself incorporate a wheel or the like for engaging the internal wall of the liner.

The ultrasonic measuring means is generally used to detect liner wall thicknesses of about 6 mm, but the wall thickness may be in the range from about 3 to about 30 mm. To this end the frequency of the ultrasonic pulse may be in the range from 1 to 10 MHz, preferably in the range from 1 to 5 MHz and ideally about 2.5 MHz.

Return echo signals from the transducer are preferably multiplexed with video signals from the camera conventionally provided on such inspection carts, but a separate cable 13 for the return echo signals can be provided if desired. Distance signals are generally transmitted along a separate cable 15.

Before the ultrasonic measuring means is used to determine the thickness of the liner along the length of the lined pipe it is generally necessary to calibrate the measuring means. With a wheel probe 5, the transducer is positioned within the wheel and not at the periphery of the probe and moreover the biasing means which urges the probe against the internal wall of the liner may not be linear. Calibration can be effected in either of two ways. One way of calibrating the ultrasonic measuring means is to detect an echo for a section of lined pipe and to adjust the thickness reading on the basis of the nominal thickness of the liner. The other way of calibrating the ultrasonic measuring means, particularly suited to a wheel probe, is to detect a first return echo from the outer surface of the wheel (corresponding to the inner surface of the liner) and to detect a second return echo from the inner surface of the unlined pipe. The figure obtained in this manner corresponds to the actual thickness of the liner.

The echo and distance signals received from the inspection cart are processed, for example by computer 17 (which may also control transmission of ultrasonic pulses from the probes 5), to provide a trace of liner thickness against distance as illustrated in Figures 1 and 2 at 19. Thickness is determined by separating out the echo signal where this is multiplexed with the video signal and converting the analogue echo signal into a digital signal. The digital signal is filtered to remove extraneous noise and the echo pulse is extracted using known techniques. The thickness of the liner can then be calculated in known manner from the time of flight of the ultrasonic pulse and the speed of sound.

## Claims

1. An apparatus for measuring the thickness of a liner for a pipe (2), characterised in that the apparatus comprises a chassis (1) adapted to be moved through the pipe, ultrasonic probe means (5) mounted on the chassis, biasing means (11) for urging the ultrasonic probe means against the internal surface of the liner (4), means (17) for controlling the ultrasonic probe means (5) to transmit a pulse of ultrasonic energy towards the liner (4) and to receive an echo therefrom, and means (17) for processing the echo so as to determine the thickness of the liner (4).

2. An apparatus according to claim 1, characterised in that the chassis (1) is provided with wheels (3) for conveying the apparatus through the pipe (2).

3. An apparatus according to claim 1 or 2, characterised in that the ultrasonic probe means (5) incorporates a plurality of probes, for example three.

4. An apparatus according to claim 3, characterised in that the probes (5) are spaced substantially equiangularly around the axis of the pipe (2).

5. An apparatus according to any preceding claim, characterised in that the ultrasonic probe means (5) is rotatable relative to the axis of the pipe (2).

6. An apparatus according to any preceding claim, characterised in that the ultrasonic probe means (5) comprises a wheel probe.

7. An apparatus according to any preceding claim, characterised in that the ultrasonic probe means (5) is biased against the internal surface of the liner (4) by spring means (11), such as a coil spring.

8. An apparatus according to any preceding claim, characterised in that the ultrasonic probe means (5) is biased against the internal surface of the liner (4) in a direction substantially perpendicular to the surface of the liner.

9. An apparatus according to any preceding claim, characterised in that the apparatus incorporates means for determining the distance the apparatus has travelled along the pipe (2).

10. An apparatus according to claim 9, characterised in that the distance determining means comprises a shaft encoder.
